# EUROPEAN PATENT APPLICATION

(11) **EP 1 050 834 A2**
(43) Date of publication of application: **08.11.2000**
(21) Application number: 00303836.1
(22) Date of filing: 08.05.2000
(51) Int. Cl.: G06F 17/60

(54) **Item exchange system and method**

(30) Priority: 06.05.1999 GB 9910508
(71) Applicant: NCR INTERNATIONAL INC., Dayton, Ohio 45479 (US)
(72) Inventor: Woods, Sarah, Catliff Road, London SW1W 8QR (GB)
(74) Representative: Cleary, Fidelma

(57) **Abstract**

A system for facilitating identification of a party having an item to exchange is provided. The system comprises an exchange database storing data relating to items offered for exchange and items desired in exchange, a data input means for inputting information relating to an item offered for exchange and/or data relating to an item desired in exchange and database searching means for comparing the input data relating to the item offered for exchange with the data relating to items desired to exchange held in the exchange database in order to find a match and/or comparing the input data relating to the item desired in exchange with data relating to items offered for exchange held in the exchange database in order to find a match.

## Description

The present invention relates to a system and method for identifying a third party having an item to exchange, and to a public terminal for interfacing with the system.

When people grow tired of a possession, or wish to replace it with a boner version, they often want to dispose of the old item to save storage space. If the item has some residual value they will usually try to sell it, for example by using the classified advertisements in a local newspaper or a specialized publication such as Exchange & Mart or Loot in the UK. Children, particularly, grow tired of possessions very quickly. Much of this is due to peer pressure which dictates that children must be involved with the latest craze. Unfortunately (and often not by accident) the latest craze will require special equipment and this is often expensive. Children, and often parents, cannot afford this incessant expenditure and a lively barter system operates in most school playgrounds. This allows children to swap the equipment used in an activity of which they have grown tired for that of an activity which they want to indulge in.

The main drawback is that the school (or other meeting forum) provides only a relatively small number of items for barter. While the aforementioned publications sometimes carry advertisements offering a swap rather than a cash deal, these are usually small in number and necessitate a lengthy search with only modest chances of success. The cost of the publications can also be significant A "WANTED" advertisement can be placed but this relies on others reading the relevant publication and the readership is often limited for the reasons given above. Sometimes placing advertisements costs money and, also, the time lag between placing the advertisement and publication can seem like eternity to a child.

World Wide Web sites are available that carry advertisements and these have the advantage that computer search tools can be used to locate an advertisement of interest. However, the low probability that the advertiser will be interested in swapping for the item that the would-be swapper possesses persists.

It is an object of the present invention to ameliorate these disadvantages.

According to a first aspect of the present invention, there is provided a system for facilitating identification of a party having an item to exchange, the system comprising: an exchange database storing data relating to items offered for exchange and items desired in exchange; data input means for inputting information relating to an item offered for exchange and/or data relating to an item desired in exchange; and database searching means for comparing the input data relating to the item offered for exchange with the data relating to items desired to exchange held in the exchange database in order to find a match and/or comparing the input data relating to the item desired in exchange with data relating to items offered for exchange held in the exchange database in order to find a match.

The system thus allows a person having a specific item which he/she is willing to exchange for another item or a person desiring a specific item in exchange for another item he/she is willing to part with to enter these details into the system so that a appropriate search can be carried out among items offered or desired by other parties.

Preferably both comparisons are carried out (i.e. a desired item against offered items and offered item against desired items) so that the best possible match or matches are found. Alternatively, the comparison may be made only between the offered item and desired items to present a greater range of options to the user. Also, the system can default to this operation when no matches are found between the wanted item and the offered items in the database.

In response to a match being made between the input data and offered items and/or desired items held in the exchange database, the details of the matched items are provided to the user so he/she can examine these. If one or more of the items are of interest, these can be selected and the contact details of the relevant party provided.

The exchange database may be automatically immediately updated to include the input data relating to the item offered for exchange and/or data relating to the item desired in exchange but may be updated only when no match is initially made by the database searching means between the input data and that of the items held in the exchange database. Alternatively, the user may select whether he/she wishes their details to be added to the exchange database.

In a preferred embodiment, a messaging facility is provided to allow a message to be entered for the contact party. This message may be stored by the system to be collected by the contact party next time they access the system or is preferably e-mailed to the contact party

The data input means preferably includes a camera for taking an image of an offered item for exchange so that this can be displayed to users of the system when a match is subsequently made between that item and one desired by another party. Most children prefer to see an image of an item rather than to read boring details and moreover a camera is fun to use. Hence the system is adapted to appeal to children.

In some instances, a user may not have decided on a particular item to offer for exchange or a particular item desired in exchange but may wish to browse through the items available before making a decision. In such cases, it is possible to enter non-specific data in relation to the desired or offered items in the appropriate fields.. The user can arrange for this operation if desired by not defining the wanted item (e.g. by entering WHY (What-Have-You?). However, it is preferable that at least specific relating to either an item offered for exchange or an item desired in exchange is provided so that a useful search can be carried out. Otherwise, details of all items offered and desired will output to the user which may not be feasible in all cases. However, subject to database size limitations, the user may be able to browse through the database contents.

The system preferably comprises a network of public terminals and the exchange database may comprise multiple databases and the database searching means is adapted to make comparisons with a plurality of databases. These databases may contain data relating to parties in a particular locality or geographical region so that the appropriate database is initially searched first for a match before those of more remote regions as this is more convenient for delivery of the items.

It should be understood tat while the item will generally be an object or objects, it is possible that the offered item will be a service (e.g. cleaning, bicycle repair, car washing, lawn moving and so on).

From a second aspect the invention resides in a method for facilitating identification of a party having an item to exchange, the method comprising maintaining an exchange database of data relating to items offered for exchange and items desired in exchange; inputting data relating to an item offered for exchange and/or data relating to an item desired in exchange; and comparing the input data relating to an item offered for exchange with the data relating to items desired to exchange held in the exchange database and/or comparing the input data relating to an item desired in exchange with data relating to items offered for exchange held in the exchange database.

While the system and method can be implemented in a number of ways (e.g. on the World Wide Web) it is possible that potential users will not have easy access to the relevant equipment/services. Consequently from a further aspect, the invention resides in a terminal for facilitating identification of a party having an item to exchange, the terminal comprising data input means for inputting information relating to an item offered for exchange and/or data relating to an item desired in exchange; a communication link to an exchange database storing data relating to items offered for exchange and items desired in exchange; and output means for providing the result of a search of the exchange database for a match.

This terminal may be arranged to provide further features such as taking a photograph of the offered item and the option of sending a message to range a meeting or find out more about the offered item.

The terminal may be part of a network of geographically-displaced terminals. Where this is the case, the user may be offered to place a geographical limitation on the location of the wanted item so tat potential swap items that are too far away are not displayed to the user. A comparison request may be sent to a further terminal or terminals if no match is found at the local terminal.

The terminal may further be provided with messaging services in addition to its swap-database functions. The messages may be general (e-graffiti) and remain on the system for a certain amount of time or they may be intended for a particular recipient or recipients. Either type of message may be typed, hand-written, audio, video and so on. When the terminal is part of a network the messages can be sent to remote terminals.

Where the terminal has a camera it may further be provided with a printer to allow a picture to be taken and printed out. This may be used as a personalised postcard-printing machine and further text may be added to the card prior to printing.

An embodiment of the present invention will now be described, by way of example, with reference to the accompanying drawings, in which:
Figure 1 shows a user interacting with a terminal;
Figure 2 is a flow chart of the operating steps taken by a swap system/terminal;
Figure 3 is a block schematic diagram of a terminal;
Figure 4 is a representation of data stored in a memory of the terminal;
Figure 5 shows a further, optional, function of the terminal (e-graffiti);
Figure 6 shows a still further optional function of the terminal;
Figure 7 shows a postcard produced by a still further optional function of the terminal; and
Figure 8 shows a video display function also provided by the invention.

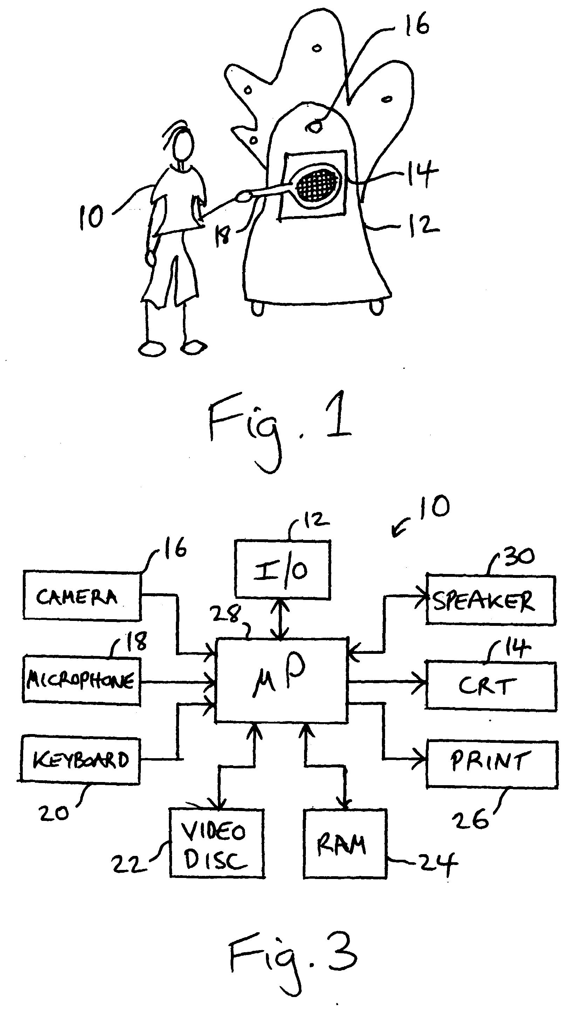

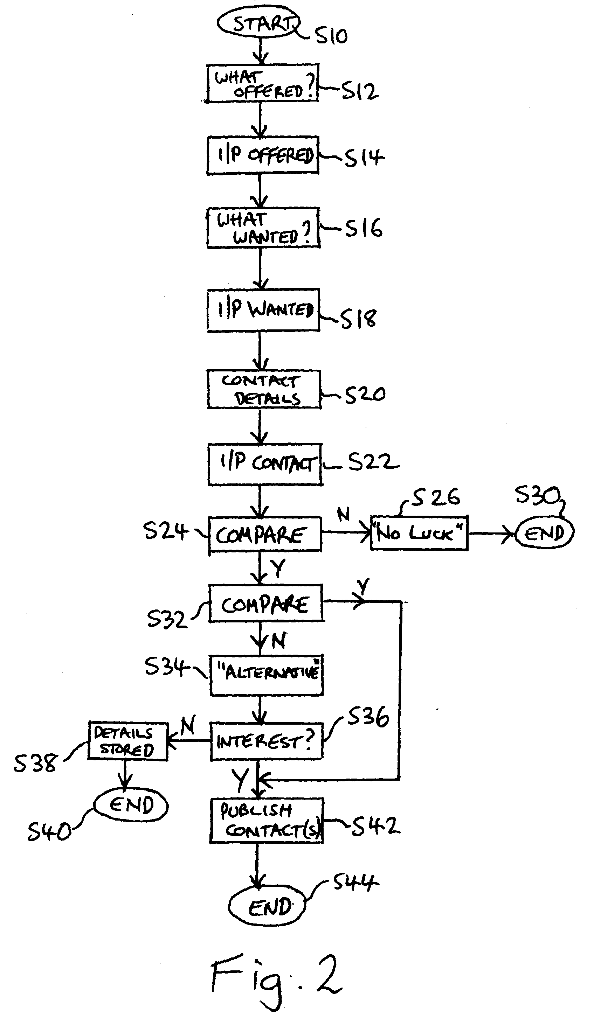

Figure 1 shows a child 10 using a terminal 12 in accordance with an embodiment of the invention. The terminal includes a display 14 and a camera 16 and the camera takes a still photograph of a tennis racket 18 that the user 10 is holding in front of the terminal. The steps taken by the terminal will be discussed with reference to Figure 2 below.

Figure 2 shows a flow chart of the steps conducted by the terminal shown in Figure 1 of a barter system in accordance with an embodiment of the invention. The method starts at step S10 and proceeds to ask a question "What is being offered to swap?" at step S12. Processing proceeds to step S14 at which the user is given the option to answer the question. While this may be by way of a keyboard input, it could equally well be by way of a touch-sensitive screen, speech-recognition or by way of photo input as illustrated in Figure 1. To allow the database to be searched a text input may be provided which may be by way of a keyboard, speech recognition or handwriting recognition.

Processing proceeds to step S16 at which the user is asked "What would you like to swap your ..... for?". At step S18 the user is given the option to input the identity of the item which is desired. At step S20 the terminal requests contact details of the user. In response to this, at step S22, the user may give a telephone number, a textual message to anyone who matches his or her swap-profile, a meeting time and date, an address or other suitable contact details.

Processing proceeds to step S24 in which the terminal or system compares the item offered by the user (input at step S14) with wanted items from a database, which will be discussed with reference to Figure 4 below. If there is no match between the newly-offered item and the wanted items in the database, then processing proceeds to step S26 where a message is given to the user, such as "I am sorry, we have had no luck matching your request today but your details have been stored for future comparisons". Processing then proceeds to step S30 at which the procedure ends. If a match or matches are found at step S24 then processing proceeds to step S32. At this step the system compares the newly-wanted item with offered items from the database. If a match is found then processing proceeds to step S42 and the contact details of the person whose offered and wanted items match those of the current user are published.

If no match is found then processing proceeds from step S32 to step S34. At this step the terminal or system prints a message giving the options, such as "I am sorry, no direct matches were found but you could swap your ........ for ........ and so on.

Processing proceeds to step S36 at which the user is asked if any of the items are of interest. If no, then processing proceeds to step S38 at which a message is given to the user such as "Your details have been stored for future reference" and processing ends at step S40.

If the user indicates that one or more of the items listed at step S34 are of interest then processing proceeds to step S34. The contact details for the item or items in which the user has expressed interest are then given as above. As an alternative to simple publication of a telephone number or address, the system or terminal may publish details of an arrangement to meet and/or leave a message for the person whose "item wanted" matches that of the user so that the user may ask further questions of that person. Once step S42 is completed, processing proceeds to step S44 and the routine ends.

Figure 3 shows a block schematic diagram of a system 10 in accordance with an embodiment of the invention. The system 10 may be located exclusively at a single terminal or, arranged as part of a multi-terminal network as required. The terminal 10 comprises a micro-processor (µP) 14 connected to: a network input/output (I/O) 12, a camera 16, a microphone 18, a keyboard 20, a video disk player 22, a random access memory (RAM) 24, a printer 26, a display such as a cathode ray tube (CRT) 28 and a loudspeaker 30. This system operates the method shown and described with respect to Figure 2.

Figure 4 shows a pictorial representation of the random access memory 24 (Figure 3). In a first column 40 is a list of the items offered. In a second column 42 is a list of the items wanted while in a third column 44 is a list of contact details relating to the items offered and items wanted. A user has stored a first request 1 which user offers a tennis racket and desires a pair of roller skates. This user has given a telephone number 0100 400900 as his contact details. A second user 2 is offering a heavy-metal T-shirt and desires a chemistry set. In order to contact this user, the contact details 44 given are that a message is left for Jack Brown. A third user 3 is offering a mountain bike in exchange for a video game and the contact details comprising meeting with Eric at 10 O'clock on 7 March at the terminal. A fourth user is offering a basketball but has no specific wanted item in mind. Consequently, he has entered the mnemonic WHY? standing for What-Have-You? Consequently, the item wanted is not defined so the comparison conducted at step S24 (Figure 2) will automatically result in a match. By way of contact details, user 4 has given his address as 14 Acacia Avenue.

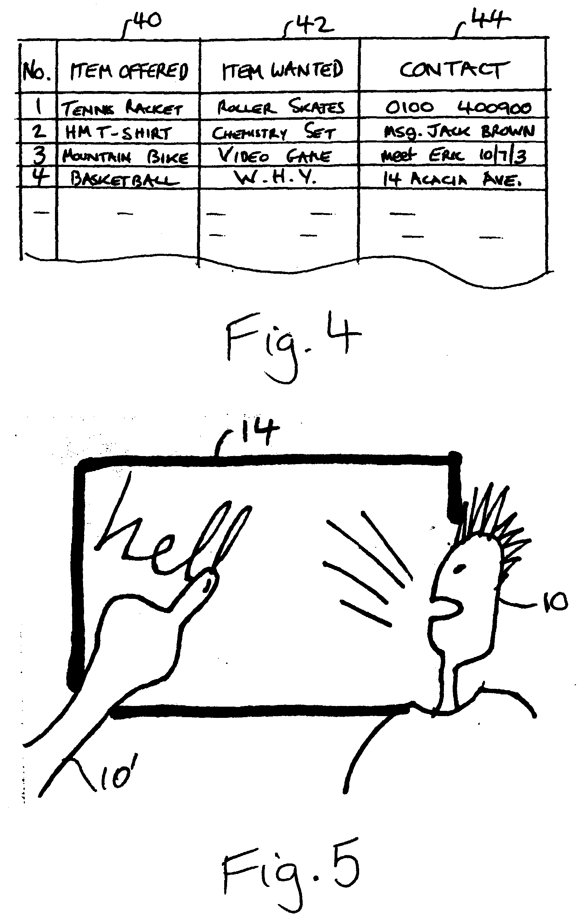

Figure 5 shows the screen 14 of a terminal together with a user 10 and the hand of a further user 10'. The user 10 is using a microphone (18, Figure 3) to leave an audio message at the terminal. The user 10' is using the touch-sensitive screen 14 to leave a hand-written message. As an alternative to these two message styles, users may also type a message using a keyboard or other text-entry techniques, provide a video clip through the camera (16, Figure 1) or use other input techniques. The messages left using this technique are played at random, in sequence or at some other frequency as desired. This additional feature may be regarded as e-graffiti.

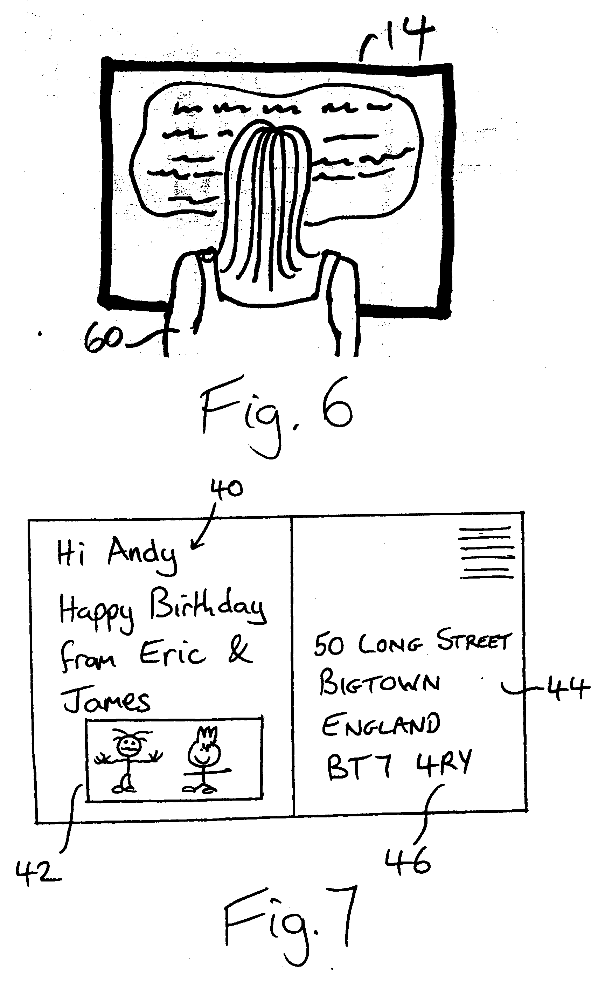

Figure 6 shows a refinement of the additional feature described with reference to Figure 5. Messages are left by any of the techniques described with reference to Figure 5 but may only be accessed by a particular user 60 who has been identified by the person leaving the message. The message, in the Figure a text message, is then printed on the screen 14 in response to the person 60 identifying themselves.

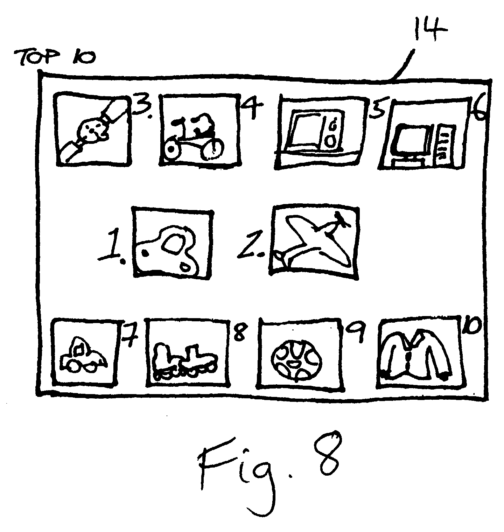

Figure 7 shows a postcard provided by another refinement of the present invention. A text message 40 is input while a photograph 42 is captured by the camera (16, Figure 1, 3). The address of the recipient including postcode (zip code) 46 is also entered. The printer (26, Figure 3) of the terminal then prints out the postcard which may be posted in the normal manner. Where the terminal comprises part of a network the postcard may be replaced by an e-postcard electronically addressed to a user or users care/of another terminal in the network.

Figure 8 shows a still further function of the terminal/system in which advertising material is played on the display 14. The advertising material (or other entertaining material) may be produced from a video disc player (22, Figure 3). The material may alternatively comprise a top-ten list of selling items which is updated from time to time. Such a feature may be provided by a local toy store which would also gain promotional benefits from the feature.

## Claims

1. System for facilitating identification of a party having an item to exchange, the system comprising:
an exchange database storing data relating to items offered for exchange and items desired in exchange; and
data input means for inputting information relating to an item offered for exchange and/or data relating to an item desired in exchange;
database searching means for comparing the input data relating to the item offered for exchange with the data relating to items desired to exchange held in the exchange database in order to find a match and/or comparing the input data relating to the item desired in exchange with data relating to items offered for exchange held in the exchange database in order to find a match.

2. A system according to claim 1, further output means for supplying details of a contact person in response to a match being made between the input data relating to the item offered for exchange with the data relating to items desired to exchange held in the exchange database and/or a match being made between the input data relating to the item desired in exchange with data relating to items offered for exchange held in the exchange database.

3. A system according to claims 1 or 2, further comprising exchange database updating means for updating the exchange database to include the input data relating to the item offered for exchange and/or data relating to the item desired in exchange.

4. A system according to claim 3, wherein the exchange data base is updated only when no match is made by the database searching means between the input data relating to the item offered for exchange with the data relating to items desired to exchange held in the exchange database and/or between the input data relating to the item desired in exchange with data relating to items offered for exchange held in the exchange database.

5. A system according to claim 3, further comprising a messaging facility to allow a message to be entered for the contact person.

6. A system according to claim 5, wherein the messaging facility is adapted to send the entered message to the contact person.

7. A system according to any preceding claim, wherein the data input means comprises a camera for taking an image of an offered item for exchange.

8. A system according to claim 1, wherein in the information input to the data input means relating to an item offered for exchange or an item desired in exchange can be non-specific.

9. A system according to any preceding claim, wherein the further comprising display means for advertising to users of the system.

10. A system according to any preceding claim, wherein the system comprises a network of public terminals.

11. A system according to claim 1, wherein the exchange database comprises multiple databases and the database searching means is adapted to make comparisons with a plurality of databases.

12. A method for facilitating identification of a party having an item to exchange, the method comprising:
maintaining an exchange database of data relating to items offered for exchange and items desired in exchange; and
inputting data relating to an item offered for exchange and/or data relating to an item desired in exchange;
comparing the input data relating to an item offered for exchange with the data relating to items desired to exchange held in the exchange database and/or comparing the input data relating to an item desired in exchange with data relating to items offered for exchange held in the exchange database.

13. An exhange terminal for facilitating identification of a party having an item to exchange, the terminal comprising:
data input means for inputting information relating to an item offered for exchange and/or data relating to an item desired in exchange;
a communication link to an exchange database storing data relating to items offered for exchange and items desired in exchange; and
output means for providing the result of a search of the exchange database for a match between the input data relating to the item offered for exchange with the data relating to items desired to exchange held in the exchange database and/or between the input data relating to the item desired in exchange with data relating to items offered for exchange held in the exchange database.
